# FASCICULE DE BREVET EUROPEEN

(11) **EP 2 719 188 B1**
(45) Date de publication et mention de la délivrance du brevet: **13.10.2021**
(21) Numéro de dépôt: 12729081.5
(22) Date de dépôt: 07.06.2012
(51) Int. Cl.: H04N 21/443

(54) **PROCEDE DE SORTIE D'UN MODE DE VEILLE BASSE CONSOMMATION ET DISPOSITIF ASSOCIE**
VERFAHREN ZUM VERLASSEN EINES ENERGIEARMEN STANDBY-MODUS UND ZUGEHÖRIGE VORRICHTUNG
METHOD FOR EXITING A LOW-CONSUMPTION STANDBY MODE, AND ASSOCIATED DEVICE

(30) Priorité: 09.06.2011 FR 1155061
(43) Date de publication de la demande: 16.04.2014
(73) Titulaire: InterDigital CE Patent Holdings, 75017 Paris (FR)
(72) Inventeur: JEANNE, Ludovic, 35576 Cesson Sevigne (FR); MORAILLON, Jean-Yves, 35576 Cesson Sevigne (FR); STEYER, Jean-Marie, 35576 Cesson Sevigne (FR)
(74) Mandataire: Interdigital
(86) Numéro de dépôt international: PCT/EP2012/060839
(87) Numéro de publication internationale: WO 2012/168391

(56) Documents cités:
- EP-A1- 2 252 118
- US-A1- 2004 128 310
- US-A1- 2010 125 726
- YUVRAJ AGARWAL ET AL: "On Demand Paging Using Bluetooth Radios on 802.11 Based networks", INTERNET CITATION, 1 juillet 2003 (2003-07-01), pages 1-19, XP002555283, Extrait de l'Internet: URL:http://eprints.kfupm.edu.sa/54180/1/54 180.pdf [extrait le 2009-11-13]
- MIRCEA POPA ET AL: "Embedded server with Wake on LAN function", EUROCON 2009, EUROCON '09. IEEE, IEEE, PISCATAWAY, NJ, USA, 18 mai 2009 (2009-05-18), pages 365-370, XP031491875, ISBN: 978-1-4244-3860-0
- Liberman Software Corporation: "White Paper: Wake on LAN Technology", , 1 juin 2006 (2006-06-01), pages 1-9, XP002680635, Extrait de l'Internet: URL:http://www.liebsoft.com/pdfs/Wake_On_L AN.pdf [extrait le 2012-07-23] cité dans la demande
- SHIH E ET AL: "WAKE ON WIRELESS: AN EVENT DRIVEN ENERGY SAVING STRATEGY FOR BATTERY OPERATED DEVICES", PROCEEDINGS OF THE 8TH. ANNUAL INTERNATIONAL CONFERENCE ON MOBILE COMPUTING AND NETWORKING. MOBICOM 2002. ATLANTA, GA, SEPT. 23 - 28, 2002; [ANNUAL INTERNATIONAL CONFERENCE ON MOBILE COMPUTING AND NETWORKING], NEW YORK, NY : ACM, US, vol. CONF. 8, 23 September 2002 (2002-09-23), pages 160-171, XP001171465, DOI: 10.1145/570645.570666 ISBN: 978-1-58113-486-5
- LIBERMAN SOFTWARE CORPORATION: "White Paper: Wake on LAN Technology", INTERNET CITATION, June 2006 (2006-06), pages 1-9, XP002680635, Retrieved from the Internet: URL:http://www.liebsoft.com/pdfs/Wake_On_L AN.pdf [retrieved on 2012-07-23]

## Description

### 1. Domaine de l'invention.

L'invention se rapporte au domaine des récepteurs décodeurs de programmes audiovisuels et plus précisément à la consommation d'énergie en mode veille et à la sortie du mode veille.

### 2. Etat de l'art.

Les récepteurs / décodeurs de programmes audiovisuels offrent de plus en plus de fonctionnalités à l'utilisateur. Il existe différents types de décodeurs se dissociant par leur interface d'entrée. Certains se connectent à une prise d'antenne permettant la réception d'un signal TNT (de Télévision Numérique Terrestre), d'autres sont connectés à un réseau câblé mis en place par un opérateur et d'autres encore disposent d'une interface d'entrée réseau pour la connexion à un réseau local domestique ou à un modem routeur lui-même connecté à internet. Dans ce dernier cas, le décodeur est destiné à une réception IPTV (de l'anglais Internet Protocol TeleVision). Il existe également des décodeurs hybrides, dotés de plusieurs interfaces d'entrée comme, par exemple, un tuner TNT et une interface réseau Ethernet (IEEE802.3). Dans ce cas le décodeur peut recevoir et restituer un programme reçu par l'une ou l'autre des interfaces.

Le développement croissant des produits numériques à usage domestique, tel que, par exemple, la télévision, les ordinateurs, les organiseurs, les téléphones mobiles, les dispositifs de stockage de données, les imprimantes, est tel qu'il est avantageux de les interconnecter par l'intermédiaire d'un réseau domestique. Ce type de réseau local, communément appelé LAN (de l'anglais Local Area Network) peut-être filaire (par exemple avec une connexion de type Ethernet), sans-fil (avec par exemple une connexion Wifi) ou associer les deux types d'interconnexion entre les dispositifs qui y sont raccordés.

Il existe aujourd'hui des configurations associant plusieurs décodeurs de programmes audiovisuels dans un même foyer. Des fonctionnalités sont alors disponibles à l'utilisateur, telles que le partage des programmes audiovisuels ou la possibilité de regarder plusieurs programmes différents sur plusieurs téléviseurs connectés respectivement à plusieurs décodeurs, par exemple dans différentes pièces de la maison.

Il existe ainsi des configurations où un décodeur connecté à la source du signal est de type « maître » et d'autres décodeurs dits « clients », connectés au décodeur « maître » par l'intermédiaire d'un réseau local, peuvent se voir transmettre les données correspondant à un programme audiovisuel depuis le décodeur « maître », en vue de sa restitution.

Si des configurations incluant un grand nombre de dispositifs interconnectés permettent à l'utilisateur de bénéficier de fonctionnalités confortables, elles induisent cependant une grande consommation d'énergie par la multiplication des dispositifs. Aussi, il devient de plus en plus important de maîtriser la consommation d'énergie des dispositifs à usage domestique mais aussi la consommation d'énergie de l'ensemble d'une installation et plus largement de l'ensemble d'un foyer.

Il existe aujourd'hui des directives en termes de consommation d'énergie. Ces directives sont à considérer avec attention lors des étapes de conception des dispositifs grand-public.

Dans le cas d'une installation où des décodeurs sont interconnectés et où un décodeur « maître » est utilisé comme serveur de programmes audiovisuels pour un décodeur « client », il n'est pas concevable de devoir maintenir dans un état de consommation important le décodeur « maître » lorsqu'il n'est pas utilisé. Un décodeur « client » souhaitant recevoir un programme audiovisuel depuis un décodeur « maître » doit pouvoir le réveiller si ce dernier est en mode veille, lui permettant ainsi d'être en mode veille aussi souvent que possible. Cette opération de réveil du décodeur « maître » peut se faire par l'intermédiaire du réseau local. Un décodeur client adresse par exemple un message au décodeur « maître » afin de lui demander de sortir du mode veille et de fournir le ou les services sollicités.

La contrainte de réduction importante de la consommation d'énergie, couplée à la nécessité de pouvoir réveiller les dispositifs crée une problématique. Il est nécessaire de disposer de modes veilles correspondant à des consommations d'énergie les plus faibles possibles et nécessaire de pouvoir réveiller un dispositif considérant que les interfaces ou modules utilisés pour le réveil sont consommateurs d'énergie.

Lorsqu'une sortie de mode veille d'un dispositif est contrôlée par l'intermédiaire de son interface réseau (par exemple Ethernet ou Wifi), l'interface réseau consomme plusieurs watts. Cette consommation pénalise l'économie d'énergie en mode veille.

De l'art antérieur, on connait le document US 2010/125726 A1 (CHEN CHIH-WEI [TW] ET AL) 20 mai 2010 (2010-05-20) qui décrit une méthode permettant à un dispositif de basculer d'un mode de veille à un mode actif.

On connait également le document YUVRAJ AGARWAL ET AL: "On Demand Paging Using Bluetooth Radios on 802.11 Based networks", 1 juillet 2003 (2003-07-01), pages 1-19 qui décrit un mécanisme basé sur la transmission de message de radiomessagerie permettant une économie d'énergie.

Enfin, le document SHIH E ET AL: "WAKE ON WIRELESS: AN EVENT DRIVEN ENERGY SAVING STRATEGY FOR BATTERY OPERATED DEVICES",PROCEEDINGS OF THE 8TH. ANNUAL INTERNATIONAL CONFERENCE ON MOBILE COMPUTING AND NETWORKING. MOBICOM 2002. ATLANTA, GA, SEPT. 23 - 28, 2002; [ANNUAL INTERNATIONAL CONFERENCE ON MOBILE COMPUTING AND NETWORKING], NEW YORK, NY : ACM, US, vol. CONF. 8, 23 septembre 2002 (2002-09-23), pages 160-171, décrit une technique permettant d'augmenter la durée de vie des batteries utilisées dans des dispositifs, technique reposant sur la possibilité d'éteindre complètement un dispositif.

### 3. Résumé de l'invention.

L'invention permet de résoudre au moins un des inconvénients de l'art antérieur en optimisant la consommation en mode veille d'un dispositif tout en permettant de contrôler la sortie du mode veille par l'intermédiaire d'une interface.

Plus particulièrement l'invention concerne un procédé de contrôle d'un dispositif, le dispositif opérant dans plusieurs modes de fonctionnement correspondant à différents niveaux de consommation d'énergie et comprenant une première et une seconde interface de communication, le procédé étant caractérisé en ce qu'il comprend, dans le dispositif les étapes d'activation de la seconde interface de communication sur réception d'un premier message de réveil par la première interface lorsque le dispositif est dans un premier mode de fonctionnement correspondant à un premier niveau de consommation d'énergie, l'activation entrainant un second niveau de consommation d'énergie supérieur au premier niveau de consommation d'énergie, de réception d'un second message de réveil par la seconde interface de communication, le second message de réveil entrainant une fermeture de lignes d'alimentation en vue d'alimenter des blocs fonctionnels dudit dispositif, une sortie d'un mode veille, et conséquemment un passage du dispositif dans un mode de fonctionnement correspondant à un troisième niveau de consommation d'énergie, le troisième niveau de consommation d'énergie étant supérieur au second niveau de consommation d'énergie.

Selon un mode de réalisation de l'invention, le premier mode de fonctionnement correspond à une configuration du dispositif dans laquelle seule la première interface est activée.

Selon un mode de réalisation de l'invention, le second mode de fonctionnement correspond à une configuration du dispositif dans laquelle seules les première et seconde interfaces sont activées.

Selon un mode de réalisation de l'invention, la première interface est une interface de communication sans-fil.

Selon un mode de réalisation de l'invention, la seconde interface est une interface de réseau de type Ethernet.

Selon un mode de réalisation de l'invention, la seconde interface est une interface de réseau sans fil, compatible avec les normes de transmission 802.11.

L'invention concerne également un dispositif opérant dans plusieurs modes de fonctionnement correspondant à différents niveaux de consommation d'énergie et comprenant une première et une seconde interface de communication, le dispositif étant caractérisé en ce qu'il comprend en outre des moyens d'activation de la seconde interface sur réception, par la première interface d'un premier message de réveil lorsque le dispositif est dans un premier mode de fonctionnement correspondant à un premier niveau de consommation d'énergie, l'activation entrainant un second niveau de consommation d'énergie supérieur au premier niveau de consommation d'énergie et des moyens de contrôle du dispositif sur réception par la seconde interface d'un second message de réveil, le second message de réveil entrainant une fermeture de lignes d'alimentation en vue d'alimenter des blocs fonctionnels dudit dispositif, une sortie d'un mode veille, et conséquemment un passage du dispositif dans un mode de fonctionnement correspondant à un troisième niveau de consommation d'énergie, le troisième niveau de consommation d'énergie étant supérieur au second niveau de consommation d'énergie.

Avantageusement, le premier message de réveil adressé à la première interface et le second message de réveil adressé à la seconde interface peuvent être émis par des dispositifs différents, ce qui offre une grande souplesse dans l'implémentation de fonctions nécessitant des interactions entre plusieurs dispositifs.

Un des avantages apportés par l'invention est la facilité de mise en œuvre de l'invention dans la conception d'un produit disposant de deux interfaces de communication et considérant l'architecture classique d'un récepteur de programmes audiovisuels. L'architecture classique d'un produit grand-public de ce type, ainsi que l'implémentation des différents modes de fonctionnement (par exemple mode veille profonde, mode veille avec réseau, mode décodeur, mode toutes fonctions) est telle qu'il est très simple, lors d'une nouvelle phase de conception, d'adapter une architecture existante pour intégrer l'invention est permettre ensuite, lors de l'utilisation du produit, le réveil d'un équipement depuis un autre équipement sans avoir à alimenter l'interface réseau en mode veille.

### 4. Liste des figures.

L'invention sera mieux comprise, et d'autres particularités et avantages apparaîtront à la lecture de la description qui va suivre, la description faisant référence aux dessins annexés parmi lesquels :
- la figure 1 illustre un réseau domestique, selon un mode de réalisation particulier de l'invention ;
- la figure 2 illustre un décodeur « maître » et un décodeur « client » couplés par un réseau local domestique tel que celui de la figure 1, selon un mode de réalisation de l'invention.
- la figure 3 illustre schématiquement les décodeurs de la figure 2 et détaille leur architecture.
- la figure 4 est un diagramme fonctionnel représentant les étapes successives qui constituent la sortie de veille du décodeur de programmes.
- la figure 5 illustre les signaux de contrôles utilisés pour la sortie du mode veille dans un décodeur tel que représenté sur la figure 3 et dans un mode de réalisation de l'invention.

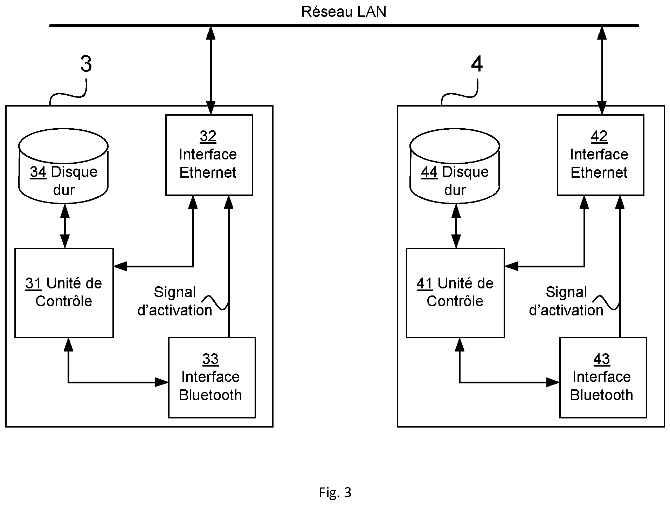

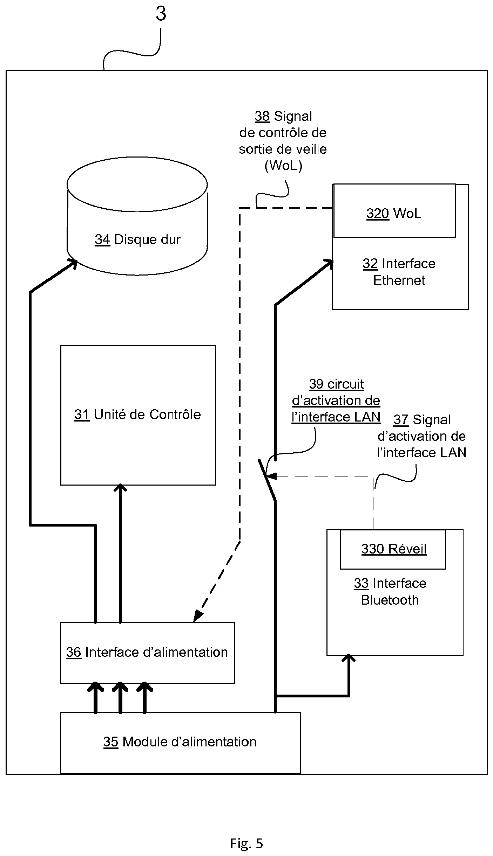

Sur les Figures 3 et 5, les modules représentés sont des unités fonctionnelles, qui peuvent ou non correspondre à des unités physiquement distinguables. Par exemple, ces modules ou certains d'entre eux peuvent être regroupés dans un unique composant, ou constituer des fonctionnalités d'un même logiciel. *A contrario,* certains modules peuvent éventuellement être composés d'entités physiques séparées.

### 5. Description détaillée de l'invention.

De manière générale mais non limitative, l'invention concerne un procédé de contrôle des modes de fonctionnement d'un décodeur de programmes audiovisuels et notamment le passage du décodeur d'un mode veille basse consommation à une mode fonctionnel dans lequel une connexion à un réseau local est active.

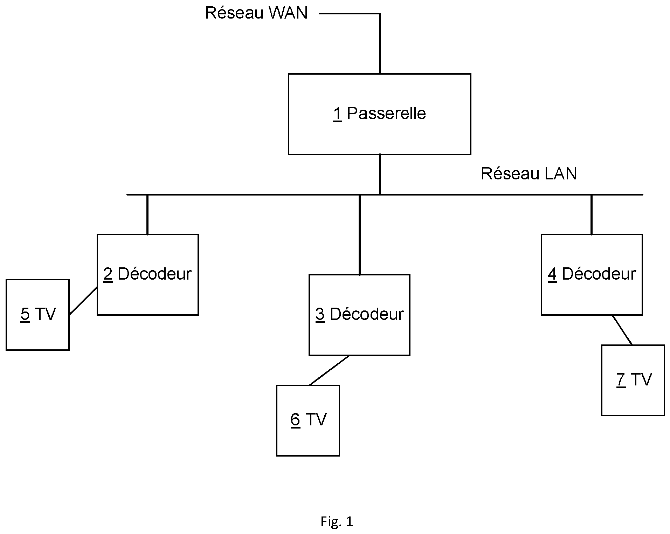

La **figure 1** illustre un réseau local domestique de type LAN regroupant trois décodeurs de télévision 1, 2, et 3, eux-mêmes respectivement connectés à des téléviseurs 5, 6, 7. Les décodeurs sont des dispositifs permettant la réception de programmes audiovisuels, leur enregistrement et leur restitution sur des dispositifs d'affichage tels que les téléviseurs 5, 6 et 7. Les décodeurs sont connectés au réseau LAN indifféremment par des interfaces de communications filaires (par exemple Ethernet) ou sans-fil (par exemple du Wifi de type 802.11). Le réseau domestique LAN est connecté à un réseau extérieur large-bande de type WAN (de l'anglais Wide Area Network) par l'intermédiaire de l'équipement passerelle 1. La passerelle est par exemple un modem-routeur ADSL (de l'anglais Asymmetric Digital Subscriber Line) qui permet la connexion d'un foyer au réseau internet mais aussi, par le biais des fournisseurs de services (opérateurs), la réception de programmes de télévision et de vidéo à la demande. Les décodeurs 2, 3 et 4 comprennent des dispositifs d'enregistrement des données reçues, tels que de la mémoire non-volatile ou un disque-dur. Un décodeur ayant enregistré un programme audiovisuel peut, entres autres fonctions, servir de serveur de programme local à un autre décodeur à travers le réseau local domestique LAN. Le décodeur qui opère, par exemple, comme un serveur de programme pour un autre décodeur est appelé décodeur « maître ». L'autre décodeur, qui reçoit le programme transmis par le décodeur « maître » sur le réseau LAN est appelé décodeur « client ». La consommation d'énergie de l'ensemble des équipements ainsi interconnectés peut être conséquente compte-tenu de leur nombre. Il convient alors de maintenir chaque équipement dans un mode veille chaque fois que cela est possible. Par exemple, quand un décodeur n'est pas en train d'enregistrer ou de restituer un programme, il peut être mis en veille par action de l'utilisateur ou après qu'il ait détecté une absence d'utilisation sur un intervalle de temps prédéfini.

Dans le cas où un utilisateur se sert d'un décodeur « client » pour visualiser un programme audiovisuel stocké par un décodeur « maître » et que le décodeur « maître » est positionné dans un mode de veille, il est nécessaire de réveiller le décodeur « maître ». Dans ce type de configuration où plusieurs équipements sont interconnectés par le biais d'un réseau LAN, il est fréquent pour un équipement d'utiliser le réseau pour adresser une commande de sortie de mode veille (ou commande de « réveil ») à un autre équipement. L'envoi d'un « paquet magique » est un procédé connu pour ce type d'activation à distance baptisé « Wake-on LAN » ou « WoL» (de l'anglais) et décrit dans le document «White Paper» (White Paper : Wake on LAN Technology de Lieberman Software, révision 2, daté du 1^{er} juin 2006). Par ce procédé, le réveil d'un équipement est activé lorsque l'interface réseau reçoit une trame de données contenant une séquence prédéfinie. Ce type de réveil à distance requiert toutefois que l'interface réseau soit active, ce qui nécessite qu'elle soit alimentée. La consommation d'une interface réseau peut atteindre plusieurs watts, ce qui n'est pas optimal au regard des recommandations et directives visant à diminuer la consommation d'énergie globale et plus particulièrement celle des équipements domestiques.

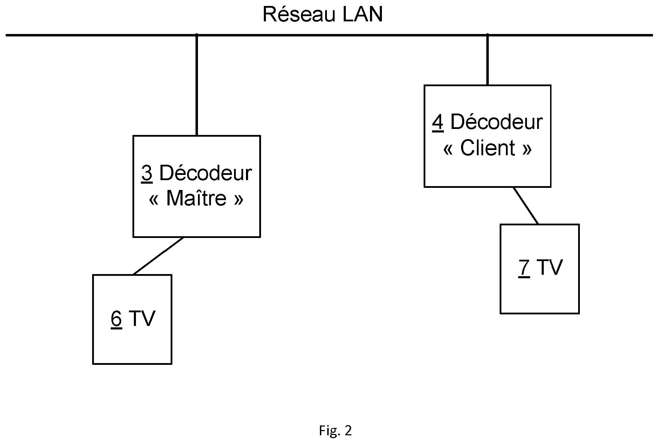

**La** **figure 2** illustre deux décodeurs interconnectés par un réseau local domestique. Le décodeur 3 est un décodeur « maître » capable d'opérer, par exemple, comme un serveur de programme local pour le décodeur « client » 4. La transmission d'un programme d'un décodeur « maître » à un décodeur « client » et un exemple parmi d'autres fonctions dont la réalisation requiert le réveil d'un décodeur par un autre sur le réseau local ou dans un environnement proche. Le décodeur 4 doit pouvoir réveiller le décodeur 3 si ce dernier est dans un mode de veille préalablement à la demande, par exemple, de transmission d'un programme audiovisuel stocké dans le décodeur 3. De la même façon, on peut imaginer qu'un décodeur ait à en réveiller au autre afin d'obtenir un service dont il ne dispose pas lui-même. Ce peut-être par exemple le désembrouillage de données, un paiement à distance, une authentification, ou le contrôle d'équipements tiers connectés au décodeur « maître » par d'autres interfaces.

Selon un mode de réalisation de l'invention et pour s'affranchir des consommations induites par les interfaces réseau LAN telles qu'un module Wifi ou une interface Ethernet, le décodeur 4 utilise une interface de communication à très faible niveau de consommation électrique pour adresser un message au décodeur 3. Cette interface peut être filaire ou sans fil, comme par exemple une interface sans fil Bluetooth (telle que décrit dans le standard IEEE802.15.1) ou une interface sans fil Zigbee (basée sur la norme WPAN 802.15.4 ; Wireless Personal Area Networks). Le niveau de consommation électrique de l'interface basse-consommation est suffisamment faible devant le niveau de consommation d'une interface Ethernet ou une interface 802.11 pour qu'il soit possible de la maintenir alimentée constamment, y compris quand le décodeur opère en mode veille.

Selon un mode de réalisation de l'invention, le message émis par le décodeur 4 et reçu par l'interface basse-consommation du décodeur 3 entraine l'activation de l'interface réseau LAN du décodeur 3. Le message est par exemple un message de type propriétaire, porté par une ou plusieurs trames de données définies selon la norme Bluetooth. Le message peut aussi bien être un message propriétaire porté par une ou plusieurs trames de données définies selon la norme Zigbee, ou n'importe quelle norme de transmission définissant l'échange de données correspondant à un type d'interface de communication. Le message comprend un identifiant qui, interprété par un module de réveil compris dans l'interface Bluetooth du décodeur 3, entraine l'activation d'un signal de contrôle (tel que décrit plus loin ; voir notamment figure 5), lequel signal permet l'activation de l'interface de réseau local. Le décodeur 3 peut alors être réveillé à distance par l'envoi d'un paquet magique (Wake-on LAN). Ce procédé de sortie d'un mode de veille en deux temps permet à la fois de pouvoir réveiller un décodeur en mode de « veille profonde », en demeurant sensible et réactif à la réception d'un message et de diminuer conséquemment sa consommation électrique en désactivant la ou les interfaces de connexion au réseau domestique local LAN, lors du passage en mode veille.

Selon un autre mode de réalisation de l'invention, le message émis par le décodeur 4 peut-être un message standardisé, défini dans une norme correspondant à un type d'interface de communication, et qui a vocation à contrôler la sortie d'un mode de veille du dispositif comprenant ce type d'interface.

**La** **figure 3** illustre le couplage de deux décodeurs 3 et 4 de programmes audiovisuels par le biais d'un réseau local domestique LAN. Le décodeur 3 comprend une unité de contrôle 31 qui est son cœur numérique. L'unité de contrôle comprend un microprocesseur et des mémoires. Les mémoires sont classiquement constituées d'une mémoire de stockage non-volatile où se trouve le code exécutable qui correspond à l'ensemble des applications, routines et pilotes supportés par le décodeur ainsi que la mémoire de travail pour le stockage des données propres à l'exécution des applications. L'unité de contrôle comprend en outre les éléments fonctionnels classique d'un décodeur de programmes audiovisuels, tels que l'interface de transport, le démultiplexeur, le contrôle d'accès au contenu, les mémoires tampons et les modules de décodage audio et vidéo permettant de décoder un flux de données numérique et de générer, à partir du signal décodé, les signaux de sortie en vue de la restitution d'un programme sur un dispositif d'affichage. Le détail de l'unité de contrôle n'est pas représenté, étant bien connu de l'homme de l'art et ne participant pas directement à la compréhension de l'invention. Le décodeur 3 comprend également un dispositif de stockage de données de type disque dur pour l'enregistrement des programmes en vue de leur relecture ou de leur transmission à travers le réseau domestique LAN. Selon un mode de réalisation de l'invention, le décodeur s'interface au réseau grâce à l'interface Ethernet 32. Cette interface peut être filaire ou sans fil et peut recevoir un paquet magique tel que défini dans le procédé Wake-on LAN pour activer un équipement à distance quand celui-ci a été positionné dans un mode de veille. Les modes de fonctionnements possibles du décodeur 3 incluent un mode où tous les éléments sont activés, rendant disponibles tous les services et toutes les fonctions implémentées. Un autre mode de fonctionnement du décodeur 3 est tel que tous les éléments fonctionnels du décodeur sont en veille à l'exception de l'interface de communication Bluetooth 33 dont la consommation est très basse. Ce mode, où seul l'interface de communication Bluetooth 33 est active, entraine une consommation globale résiduelle du décodeur en mode veille très faible. Selon l'invention, il existe au moins un autre mode intermédiaire dans lequel, en plus de l'interface de communication Bluetooth 33, l'interface de connexion au réseau LAN est alimentée. Dans ce dernier mode la consommation est accrue, mais demeure toutefois inférieure à celle du décodeur lorsque de multiples éléments fonctionnels (ou modules) sont actifs et de nombreuses fonctions sont disponibles.

Le décodeur 4 est structurellement identique au décodeur 3. Il comprend une unité de contrôle 41, une interface de réseau LAN 42, une interface basse consommation 43 et un disque dur 44. Aussi, il peut être utilisé comme décodeur « client » en combinaison avec le décodeur 3 alors utilisé comme décodeur « maître » ou inversement comme décodeur « maître » délivrant un programme audiovisuel au décodeur 3 en mode « client ».

Lorsque le décodeur 4 en mode « client » s'apprête à recevoir un programme audiovisuel depuis le décodeur 3 opérant en mode veille, il commande à distance la sortie du mode veille du décodeur 3 selon le procédé et de la façon suivante : L'unité de contrôle 41 du décodeur 4 commande l'envoi d'un message de réveil à l'intention du décodeur 3 par l'intermédiaire de l'interface de communication sans-fil Bluetooth 43. Le message est transmis par radio selon le protocole de transmission bluetooth (courte distance) dans l'environnement proche du décodeur 4. Le décodeur 3, dans la portée du champ de transmission de l'interface 43, reçoit le message de réveil par l'interface de communication Bluetooth 33. L'interface Bluetooth 33 du décodeur 3 est toujours active ; les autres éléments fonctionnels du décodeur 3 sont inactifs. La réception et la reconnaissance du message de réveil par l'interface Bluetooth 33 du décodeur 3 entraine le changement d'état d'un signal d'activation de l'interface réseau LAN 32 du décodeur 3. Selon un mode de réalisation de l'invention, le signal d'activation entraine la commutation d'un circuit d'alimentation de l'interface LAN 32. Selon un autre mode de réalisation, l'interface 32 comprend un ou plusieurs circuits intégrés disposant d'une entrée de commande d'activation et de désactivation la rendant respectivement opérante ou inopérante et correspondant à une commande mise en veille et de réveil de l'interface 32. L'assertion du signal d'activation entre l'interface basse consommation 33 et l'interface de réseau local LAN 32 rend l'interface réseau 32 sensible et réactive à la détection d'un message de réveil de type Wake-on LAN qui lui serait adressée au travers du réseau LAN. Après un délai supérieur au temps d'activation de l'interface LAN 32, le décodeur 4 adresse, sous contrôle de l'unité de contrôle 41 et par l'intermédiaire de son interface de réseau local 42, un message de réveil de type « paquet magique », par l'intermédiaire du réseau local LAN. La réception de ce « paquet magique », spécifiant le décodeur 3 comme destinataire du paquet, entraine la sortie de mode veille du décodeur 3 et l'activation des fonctions nécessaire au service demandé, tel que la transmission d'un programme stocké sur le disque dur 34 vers le décodeur 4, à travers son interface réseau 42, en vue de son décodage et de sa restitution.

Avantageusement, l'activation des fonctions suite à la réception d'un « paquet magique » est limitée à un nombre prédéterminé de modules fonctionnels du dispositif sortant de veille. L'activation peut, par exemple, ne concerner que l'interface de réseau local LAN ainsi que la logique de contrôle associée permettant à des dispositifs externes de communiquer par le biais de l'interface de réseau local LAN. L'activation peut également, selon un autre exemple, concerner un module d'affichage et de gestion de clavier, un module de réception pour la télécommande, une ou plusieurs interfaces USB, un disque dur, un module de mémoire, ou tout autre module ou ensemble de modules intégrés au dispositif. L'activation d'un sous-ensemble seulement des modules fonctionnels d'un dispositif et la disponibilité qui en découle d'un sous-ensemble des fonctions et services disponibles à l'utilisateur, crée de fait une pluralité de modes fonctionnels différents, qui se caractérisent, entre autres, pas les possibilités offertes à l'utilisateur et par la consommation d'énergie propre à chacun des modes.

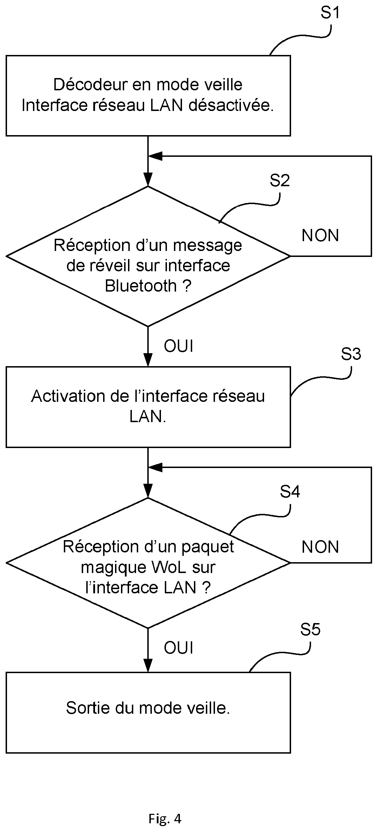

**La** **figure 4** est un diagramme fonctionnel qui représente le passage d'un mode de veille basse consommation à un mode opérationnel du décodeur selon un mode de réalisation de l'invention. A l'étape S1, le décodeur est dans un mode de veille où seule l'interface de communication Bluetooth, de très basse consommation en énergie est activée. A l'étape S2, le décodeur est en attente d'un message de réveil par l'intermédiaire de l'interface de communication Bluetooth. A l'étape S3, le décodeur à reçu un message de réveil et l'interface de communication Bluetooth contrôle un signal d'activation de l'interface réseau local LAN. L'interface est alors active est le décodeur peut être réveillé par réception d'un paquet magique (encore appelé usuellement « magie packet ») sur l'interface de réseau LAN. Avantageusement le signal de contrôle peut agir sur une circuiterie de commutation d'alimentation ou d'horloge, ou encore peut être appliqué à une ou des entrées de validation d'un ou plusieurs circuits intégrés qui constituent tout ou partie de l'interface de réseau LAN. A l'étape S4, le décodeur est en attente d'un paquet magique. A l'étape S5, la réception d'un paquet magique entraîne le réveil du décodeur et l'activation des fonctions requises.

**La** **figure 5** détaille les moyens et notamment les signaux de contrôle utilisés pour la sortie du mode veille du décodeur de programmes 3. Selon un mode de réalisation de l'invention, un module d'alimentation 35 délivre des lignes d'alimentation. Les lignes d'alimentation délivrent l'alimentation aux différents blocs fonctionnels qui constituent le décodeur. Une ligne d'alimentation alimente directement l'interface Bluetooth 33 qui est sous tension en permanence. Une autre ligne d'alimentation alimente l'interface de réseau local LAN 32 à travers un circuit d'activation 39. Le circuit d'activation 39 est piloté par un signal d'activation 37 de l'interface LAN, généré par le module de réveil 330 de l'interface Bluetooth 33. Les autres lignes d'alimentation transitent par l'interface d'alimentation 36 qui permet l'ouverture ou la fermeture des lignes et donc l'application ou non des tensions d'alimentation correspondantes aux autres blocs fonctionnels (31, 34). L'interface d'alimentation est pilotée par le signal de contrôle de sortie de veille 38, lui-même généré par le module WoL (de l'anglais Wake-on Lan) 320 de l'interface de réseau local LAN 32.

Selon un mode de réalisation de l'invention, l'interface de communication Bluetooth 33 du décodeur 3 positionné en mode de veille peut recevoir un message de réveil. Les messages entrants sont interprétés par le module de réveil 330 de l'interface Bluetooth 33. Dans le cas où un message reçu est interprété comme un message de réveil à destination du décodeur 3, par exemple par la reconnaissance d'un identifiant spécifique dans une trame de données, le module de réveil 330 positionne le signal d'activation 37 de l'interface de réseau local LAN afin de commander le circuit d'activation 39 pour alimenter l'interface de réseau local LAN 32. Ensuite, et à la réception d'un « paquet magique » destiné au décodeur 3, le module WoL de l'interface de réseau local LAN positionne le signal de contrôle de sortie de veille 38 afin de contrôler l'interface d'alimentation 36 et de fermer les lignes d'alimentation en vue d'alimenter les blocs fonctionnels unité de contrôle 31 et disque dur 34 et de sortir du mode veille. Le décodeur 3 sort alors du mode de veille et les fonctionnalités qui requièrent le fonctionnement de l'unité de contrôle 31 et du disque dur 34 sont alors disponibles. C'est le cas, par exemple, de la transmission d'un programme audiovisuel à un autre décodeur, par l'intermédiaire de l'interface de réseau local LAN 32, en vue de son décodage et de sa restitution.

Ce procédé de réveil en deux étapes successives permet d'activer un décodeur en sortant du mode veille tout en s'affranchissant de la consommation d'énergie inhérente au maintien en activité de l'interface réseau LAN.

La consommation d'énergie du décodeur en est sensiblement diminuée, ce qui permet de mieux répondre aux exigences des directives visant à réduire la consommation global du parc des équipements domestiques.

L'invention, décrite dans le cadre d'une transmission d'une programme d'un décodeur à un autre décodeur à travers un réseau domestique, concerne cependant tout autre dispositif disposant d'au moins deux interfaces de communication et de plusieurs modes de fonctionnement correspondant à plusieurs niveaux de consommation d'énergie.

L'invention peut s'appliquer par exemple à un ordinateur comprenant deux interfaces de communication telles qu'une interface Wifi et une interface Bluetooth. Un autre exemple d'application est un équipement serveur de stockage destiné à être utilisé sur un réseau local, classiquement appelé NAS (de l'anglais Network Attached Storage), lequel équipement peut être réveillé par un ordinateur placé dans un environnement proche et utilisant par exemple une interface Bluetooth pour adresser un premier message de réveil et une interface Ethernet filaire ou Wifi pour adresser un « paquet magique ».

## Revendications

1. Procédé de contrôle d'un dispositif (3), ledit dispositif (3) opérant dans plusieurs modes de fonctionnement correspondant à différents niveaux de consommation d'énergie et comprenant une première et une seconde interface de communication (33, 32), ledit procédé étant **caractérisé en ce qu'**il comprend, dans ledit dispositif les étapes :
- d'activation (S3) de ladite seconde interface de communication sur réception (S2) d'un premier message de réveil par ladite première interface lorsque ledit dispositif est dans un premier mode de fonctionnement (S1) correspondant à un premier niveau de consommation d'énergie, ladite activation entrainant un second niveau de consommation d'énergie supérieur audit premier niveau de consommation d'énergie,
- de réception (S4) d'un second message de réveil par ladite seconde interface de communication, ledit second message de réveil entrainant une fermeture de lignes d'alimentation en vue d'alimenter des blocs fonctionnels dudit dispositif, une sortie du mode veille,
et conséquemment un passage dudit dispositif dans un mode de fonctionnement correspondant à un troisième niveau de consommation d'énergie, ledit troisième niveau de consommation d'énergie étant supérieur audit second niveau de consommation d'énergie.

2. Procédé selon la revendication 1, **caractérisé en ce que** ledit premier mode de fonctionnement correspond à une configuration dudit dispositif dans laquelle seule ladite première interface est activée.

3. Procédé selon l'une des revendications 1 à 2, **caractérisé en ce que** ledit second mode de fonctionnement correspond à une configuration dudit dispositif dans laquelle seules lesdites première et seconde interfaces sont activées.

4. Procédé, selon l'une des revendications 1 à 3, **caractérisé en ce que** ladite première interface est une interface de communication sans-fil.

5. Procédé, selon l'une des revendications 1 à 4, **caractérisé en ce que** ladite seconde interface est une interface de réseau de type Ethernet.

6. Procédé, selon l'une des revendications 1 à 5, **caractérisé en ce que** ladite seconde interface est une interface de réseau sans fil, compatible avec les normes de transmission 802.11.

7. Dispositif (3) opérant dans plusieurs modes de fonctionnement correspondant à différents niveaux de consommation d'énergie et comprenant une première et une seconde interface (33,32) de communication, ledit dispositif (3) étant **caractérisé en ce qu'**il comprend en outre:
- des moyens d'activation (330, 37, 39) de ladite seconde interface (32) sur réception, par ladite première interface (33) d'un premier message de réveil lorsque ledit dispositif est dans un premier mode de fonctionnement correspondant à un premier niveau de consommation d'énergie, ladite activation entrainant un second niveau de consommation d'énergie supérieur audit premier niveau de consommation d'énergie,
- des moyens de contrôle (320, 38, 36) dudit dispositif (3) sur réception par ladite seconde interface (32) d'un second message de réveil, ledit second message de réveil entrainant une fermeture de lignes d'alimentation en vue d'alimenter des blocs fonctionnels dudit dispositif, une sortie du mode veille, et conséquemment un passage dudit dispositif dans un mode de fonctionnement correspondant à un troisième niveau de consommation d'énergie, ledit troisième niveau de consommation d'énergie étant supérieur audit second niveau de consommation d'énergie.

8. Dispositif selon la revendication 7, **caractérisé en ce que** ledit premier mode de fonctionnement correspond à une configuration dudit dispositif dans laquelle seule ladite première interface (33) est activée.

9. Dispositif selon l'une des revendications 7 à 8, **caractérisé en ce que** ledit second mode de fonctionnement correspond à une configuration dudit dispositif dans laquelle seules lesdites première (33) et seconde (32) interfaces sont activées.

10. Dispositif selon l'une des revendications 7 à 9, **caractérisé en ce que** ladite première interface (33) est une interface de communication sans-fil.

11. Dispositif selon l'une des revendications 7 à 10, **caractérisé en ce que** ladite seconde interface (32) est une interface de réseau de type Ethernet.

12. Dispositif selon l'une des revendications 7 à 11, **caractérisé en ce que** ladite seconde interface (32) est une interface de réseau sans fil, compatible avec les normes de transmission 802.11.

## Patentansprüche

1. Verfahren zum Steuern einer Vorrichtung (3), wobei die besagte Vorrichtung (3) in verschiedenen Funktionsmodi arbeitet, die verschiedenen Energieverbrauchsstufen entsprechen, und eine erste und eine zweite Kommunikationsschnittstelle (33, 32)umfasst, wobei das Verfahren **dadurch gekennzeichnet ist, dass** es in der besagten Vorrichtung die folgenden Schritte umfasst:
- Aktivierung (S3) der zweiten Kommunikationsschnittstelle nach Empfang (S2) einer ersten Wecknachricht durch die erste Schnittstelle, wenn sich die Vorrichtung in einem ersten Funktionsmodus (S1) befindet, der einer ersten Energieverbrauchsstufe entspricht, wobei die Aktivierung eine zweite Energieverbrauchsstufe zur Folge hat, die über der ersten Energieverbrauchsstufe liegt,
- Empfang (S4) einer zweiten Wecknachricht durch die zweite Kommunikationsschnittstelle, wobei die zweite Wecknachricht ein Schließen der Versorgungsleitungen zur Speisung der Funktionsblöcke der Vorrichtung, ein Verlassen des Standby-Modus, zur Folge hat, und infolgedessen einen Übergang der Vorrichtung in einen Funktionsmodus, der einer dritten Energieverbrauchsstufe entspricht, wobei die dritte Energieverbrauchsstufe über der zweiten Energieverbrauchsstufe liegt.

2. Verfahren nach Anspruch 1, **dadurch gekennzeichnet, dass** der erste Funktionsmodus einer Konfiguration der besagten Vorrichtung entspricht, in welcher nur die erste Schnittstelle aktiviert wird.

3. Verfahren nach einem der Ansprüche 1 bis 2, **dadurch gekennzeichnet, dass** der zweite Funktionsmodus einer Konfiguration der besagten Vorrichtung entspricht, in welcher nur die erste und die zweite Schnittstelle aktiviert werden.

4. Verfahren nach einem der Ansprüche 1 bis 3, **dadurch gekennzeichnet, dass** die erste Schnittstelle eine Schnittstelle zur drahtlosen Kommunikation ist.

5. Verfahren nach einem der Ansprüche 1 bis 4, **dadurch gekennzeichnet, dass** die zweite Schnittstelle eine Netzwerkschnittstelle vom Typ Ethernet ist.

6. Verfahren nach einem der Ansprüche 1 bis 5, **dadurch gekennzeichnet, dass** die zweite Schnittstelle eine drahtlose Netzwerkschnittstelle ist, kompatibel mit den Übertragungsnormen 802.11.

7. Vorrichtung (3), die in verschiedenen Funktionsmodi arbeitet, die verschiedenen Energieverbrauchsstufen entsprechen, und eine erste und eine zweite Kommunikationsschnittstelle (33, 32)umfasst, wobei die besagte Vorrichtung (3) **dadurch gekennzeichnet ist, dass** sie unter anderem folgendes umfasst:
- Mittel zur Aktivierung (330, 37, 39) der zweiten Schnittstelle (32) nach Erhalt durch die erste Schnittstelle (33) einer ersten Wecknachricht, wenn sich die Vorrichtung in einem ersten Funktionsmodus befindet, der einer ersten Energieverbrauchsstufe entspricht, wobei die Aktivierung eine zweite Energieverbrauchsstufe zur Folge hat, die über der ersten Energieverbrauchsstufe liegt,
- Mittel zur Steuerung (320, 38, 36) der Vorrichtung (3) nach Empfang durch die zweite Schnittstelle (32) einer zweiten Wecknachricht, wobei die zweite Wecknachricht ein Schließen von Versorgungsleitungen zur Speisung der Funktionsblöcke der Vorrichtung, ein Verlassen des Standby-Modus, zur Folge hat, und infolgedessen einen Übergang der Vorrichtung in einen Funktionsmodus, der einer dritten Energieverbrauchsstufe entspricht, wobei die dritte Energieverbrauchsstufe über der zweiten Energieverbrauchsstufe liegt.

8. Vorrichtung nach Anspruch 7, **dadurch gekennzeichnet, dass** der erste Funktionsmodus einer Konfiguration der besagten Vorrichtung entspricht, in welcher nur die erste Schnittstelle (33) aktiviert wird.

9. Vorrichtung nach einem der Ansprüche 7 bis 8, **dadurch gekennzeichnet, dass** der zweite Funktionsmodus einer Konfiguration der besagten Vorrichtung entspricht, in welcher nur die erste (33) und die zweite (32) Schnittstelle aktiviert werden.

10. Vorrichtung nach einem der Ansprüche 7 bis 9, **dadurch gekennzeichnet, dass** die erste Schnittstelle (33) eine Schnittstelle zur drahtlosen Kommunikation ist.

11. Vorrichtung nach einem der Ansprüche 7 bis 10, **dadurch gekennzeichnet, dass** die zweite Schnittstelle (32) eine Netzwerkschnittstelle vom Typ Ethernet ist.

12. Vorrichtung nach einem der Ansprüche 7 bis 11, **dadurch gekennzeichnet, dass** die zweite Schnittstelle (32) eine drahtlose Netzwerkschnittstelle ist, kompatibel mit den Übertragungsnormen 802.11.

## Claims

1. Method for controlling a device (3), said device (3) operating in several operating modes corresponding to different levels of power consumption and comprising a first and a second communication interface (33, 32), said method being **characterised in that** it comprises, in said device the steps of:
- activating (S3) said second communication interface upon receiving (S2) a first wake-up message via said first interface when said device is in a first operating mode (S1) corresponding to a first level of power consumption, said activation resulting in a second level of power consumption higher than said first level of power consumption.
- receiving (S4) a second wake-up message via said second communication interface, said second wake-up message resulting in the closure of power supply lines with a view to supplying power to functional blocks of said device, an exit from the standby mode, and consequently a transition of said device to an operating mode corresponding to a third level of power consumption, said third level of power consumption being higher than said second level of power consumption.

2. Method according to claim 1, **characterised in that** said first operating mode corresponds to a configuration of said device wherein only said first interface is activated.

3. Method according to one of claims 1 to 2, **characterised in that** said second operating mode corresponds to a configuration of said device wherein only said first and second interface are activated.

4. Method according to one of claims 1 to 3, **characterised in that** said first interface is a wireless communication interface.

5. Method according to one of claims 1 to 4, **characterised in that** said second interface is a network interface of Ethernet type.

6. Method according to one of claims 1 to 5, **characterised in that** said second interface is a wireless network interface, compatible with the 802.11 transmission standards.

7. Device (3) operating in several operating modes corresponding to different levels of power consumption and comprising a first and a second communication interface (33,32), said device (3) being **characterised in that** it further comprises:
- means for activating (330, 37, 39) said second interface (32) upon receiving, via said first interface (33) a first wake-up message when said device is in a first operating mode corresponding to a first level of power consumption, said activation resulting in a second level of power consumption higher than said first level of power consumption;
- means for controlling (320, 38, 36) said device (3) upon receiving via said second interface (32) a second wake-up message, said second wake-up message resulting in the closure of power supply lines with a view to supplying power to functional blocks of said device, an exit from the standby mode, and consequently a transition of said device to an operating mode corresponding to a third level of power consumption, said third level of power consumption being higher than said second level of power consumption.

8. Device according to claim 7, **characterised in that** said first operating mode corresponds to a configuration of said device wherein only said first interface (33) is activated.

9. Device according to one of claims 7 to 8, **characterised in that** said second operating mode corresponds to a configuration of said device wherein only said first (33) and second (32) interface are activated.

10. Device according to one of claims 7 to 9, **characterised in that** said first interface (33) is a wireless communication interface.

11. Device according to one of claims 7 to 10, **characterised in that** said second interface (32) is a network interface of Ethernet type.

12. Device according to one of claims 7 to 11, **characterised in that** said second interface (32) is a wireless network interface, compatible with the 802.11 transmission standards.
